# EUROPÄISCHE PATENTSCHRIFT

(11) **EP 1 995 871 B1**
(45) Veröffentlichungstag und Bekanntmachung des Hinweises auf die Patenterteilung: **15.08.2018**
(21) Anmeldenummer: 08008891.7
(22) Anmeldetag: 14.05.2008
(51) Int. Cl.: H02M 1/00, H02M 7/487, H02P 29/024

(54) **Verfahren zum Betreiben einer elektrischen Schaltung**
Method for operating an electrical circuit
Procédé de fonctionnement d'un circuit électrique

(30) Priorität: 24.05.2007 DE 102007024178
(43) Veröffentlichungstag der Anmeldung: 26.11.2008
(73) Patentinhaber: GE Energy Power Conversion Technology Limited, Rugby Warwickshire CV21 1BU (GB)
(72) Erfinder: Jakob, Roland, Dr.-Ing., 12524 Berlin (DE); Nahrstaedt, Manfred, Dr., 12247 Berlin (DE); Steglich, Jürgen, 10965 Berlin (DE)
(74) Vertreter: Serjeants LLP

(56) Entgegenhaltungen:
- DE-B3- 10 254 497
- JP-A- 10 248 291
- US-B1- 6 239 566

## Beschreibung

Die Erfindung betrifft ein Verfahren zum Betreiben einer elektrischen Schaltung, wobei die Schaltung einen Umrichter mit einer Mehrzahl von ansteuerbaren Halbleiterschaltern sowie mit mindestens zwei Wechselspannungsphasen aufweist. Die Erfindung betrifft ebenfalls eine entsprechende elektrische Schaltung.

Es ist bekannt, Motoren oder andere elektrische Lasten mit Hilfe von geschalteten Umrichtern zu betreiben. Sind beispielsweise mehrere Motoren vorhanden, so kann jedem Motor ein Wechselrichter zugeordnet werden, und die Wechselrichter können dann über einen Gleichspannungszwischenkreis und über einen Gleichrichter an ein Wechselspannungsnetz angeschlossen werden. Zur Ansteuerung der Gleich- und Wechselrichter sind Pulsmustergeneratoren bekannt, mit denen die in den Gleich- und Wechselrichtern enthaltenen Leistungshalbleiterbauelemente in die jeweils erwünschten Schaltzustände geschaltet werden können.

Weiterhin ist bekannt, dass beispielsweise im Bereich der Mittelspannungstechnik in elektrischen Schaltungen aufgrund von Fehlfunktionen oder Fehlbedienungen ein Störlichtbogen zwischen zwei wechselspannungsseitigen Phasen entstehen kann. Aufgrund seines sehr hohen Energieinhalts kann ein derartiger Störlichtbogen erhebliche Sach- und Personenschäden nach sich ziehen.

Es sind deshalb sogenannte Störlichtbogen-Schutzvorrichtungen bekannt, mit denen ein Störlichtbogen möglichst schnell erkannt und möglichst frühzeitig unterdrückt werden soll.

Beispielhaft wird auf die DE 102 54 497 B3 verwiesen. Dort wird der örtliche Bereich, in dem die drei Phasen einer Energieversorgungsanlage geführt sind, mit Hilfe von Lichtempfängern überwacht. Bei den Lichtempfängern kann es sich beispielsweise um Lichtfasern handeln, mit denen es möglich ist, das Licht eines Störlichtbogens weiterzuleiten. Mit Hilfe einer Filterschaltung kann dann das empfangene Licht dahingehend beurteilt werden, ob es sich beispielsweise um einen energiereichen Störlichtbogen handelt oder nicht. Weiterhin sind mechanische Schalter vorhanden, mit denen die drei wechselspannungsseitigen Phasen kurzgeschlossen werden können. Diese Schalter können von einer von der Filterschaltung auslösbaren Aktivierungseinrichtung einmalig in ihren geschlossenen Zustand überführt werden. Die Aktivierungseinrichtung kann beispielsweise ein chemisches Gemisch enthalten, das in Abhängigkeit von dem bei einem Störlichtbogen entstehenden Licht zur Reaktion gebracht werden kann. Es erfolgt dann ein sehr schnelles Schließen der Schalter, so dass die drei Wechselspannungsphasen kurzgeschlossen sind. Dem Störlichtbogen wird durch dieses Kurzschließen die Energie entzogen, so dass ein weitergehender Schaden durch den Störlichtbogen vermieden wird. Die Aktivierungsschaltung ist jedoch verbraucht und muss in jedem Fall ersetzt werden.

JP 10 248291 A offenbart einen Umrichter mit Halbleiterschaltern und die Detektion eines Störlichtbogens eines in einer Vakuumkammer untergebrachten Elektromotors, wobei bei Detektion des Störlichtbogens die Halbleiterschalter sperrend geschalten werden, um den Stromfluss zum Motors zu unterbrechen.

Derartige Störlichtbogen-Schutzvorrichtungen werden auch bei elektrischen Schaltungen der eingangs genannten Art eingesetzt, also bei Schaltungen, bei denen z.B. Motoren mit Hilfe von geschalteten Umrichtern betrieben werden. Ein Nachteil einer derartigen, mit einem Schutz gegen einen Störlichtbogen versehenen Umrichter-Schaltung besteht in dem hohen Aufwand, der für die Realisierung der Störlichtbogen-Schutzvorrichtung erforderlich ist.
Eine Aufgabe der Erfindung besteht darin, ein Verfahren zum Betreiben einer elektrischen Schaltung der eingangs genannten Art zu schaffen, das im Hinblick auf den Schutz vor einem Störlichtbogen einen geringeren Aufwand erfordert.

Die Erfindung löst diese Aufgabe durch ein Verfahren nach dem Anspruch 1 sowie durch eine elektrische Schaltung nach dem Anspruch 4.

Bei der Erfindung ist ein Umrichter vorgesehen, der mit einer Mehrzahl von ansteuerbaren Halbleiterschaltern sowie mit mindestens zwei Wechselspannungsphasen versehen ist. Erfindungsgemäß wird ein Störlichtbogen erkannt und daraufhin wird einer oder mehrere der Halbleiterschalter des Umrichters derart angesteuert, dass die Wechselspannungsphasen des Umrichters kurzgeschlossen sind.

Die Erfindung benötigt somit keine zusätzlichen Bauteile zum Kurzschließen der Wechselspannungsphasen. Insbesondere sind keine aufwendigen Aktivierungseinrichtungen oder dergleichen erforderlich. Statt dessen werden die im Umrichter bereits vorhandenen Halbleiterschalter dazu verwendet, die Wechselspannungsphasen kurzzuschließen.

Damit wird nicht nur - wie erwähnt - der Bauteileaufwand vermindert, sondern es wird gleichzeitig der Vorteil erreicht, dass das Kurzschließen der Wechselspannungsphasen aufgrund der äußerst kurzen Schaltzeiten der Halbleiterschalter ebenfalls sehr schnell durchgeführt werden kann. Vorzugsweise können sogenannte GTO-Halbleiterschalter (GTO = gate-turn-off) oder auch sogenannte IGBT-Halbleiterschalter (IGBT = insulated gate bipolar transistor) zur Anwendung kommen, die eine Schaltdauer von wenigen Mikrosekunden besitzen. Damit ist es möglich, den Störlichtbogen erst gar nicht vollständig entstehen zu lassen, sondern statt dessen dem Störlichtbogen bereits nach einer sehr kurzen Zeitdauer bereits wieder die Energie zu entziehen. Dies bringt den wesentlichen Vorteil mit sich, dass der Störlichtbogen zu keinen weitergehenden Schäden führen kann.

Insbesondere bei der Verwendung der genannten GTO-Halbleiterschalter führt das Kurzschließen der drei Wechselspannungsphasen auch zu keiner Schädigung dieser Halbleiterschalter. In diesem Fall hat ein Störlichtbogen somit nahezu keine negativen Folgen. Insbesondere führt der Störlichtbogen nicht zur Zerstörung der Halbleiterschalter, so dass diese danach auch nicht ausgetauscht werden müssen.

Der Störlichtbogen kann mit Hilfe von lichtempfindlichen Dioden oder dergleichen erkannt werden. Alternativ oder additiv ist es möglich, den Störlichtbogen mit Hilfe von Stromsensoren oder Stromwandlern zu erkennen, die in der elektrischen Schaltung bereits vorhanden sind. Ebenfalls alternativ oder additiv kann der Störlichtbogen dadurch erkannt wird, dass zur Verfügung stehende Signale und/oder Parameter des Umrichters ausgewertet werden. In den letztgenannten Fällen erfordert der erfindungsgemäße Schutz gegen einen Störlichtbogen somit keinen zusätzlichen Aufwand, insbesondere keine zusätzlichen Bauteile.

Die Erfindung kann auf der Netzseite, also insbesondere bei einem netzseitigen Gleichrichter, wie auch auf der Maschinenseite, also insbesondere bei einem maschinenseitigen Wechselrichter, zur Anwendung kommen. Es versteht sich, dass es dabei nicht auf die schaltungstechnische Ausgestaltung des Gleich- oder Wechselrichters oder die zur Anwendung kommenden Halbleiterschalter ankommt. Ebenfalls kann die Erfindung nicht nur in einem dreiphasigen Netz zur Anwendung kommen, sondern auch in einem zweiphasigen oder ganz allgemein n-phasigen Netz.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

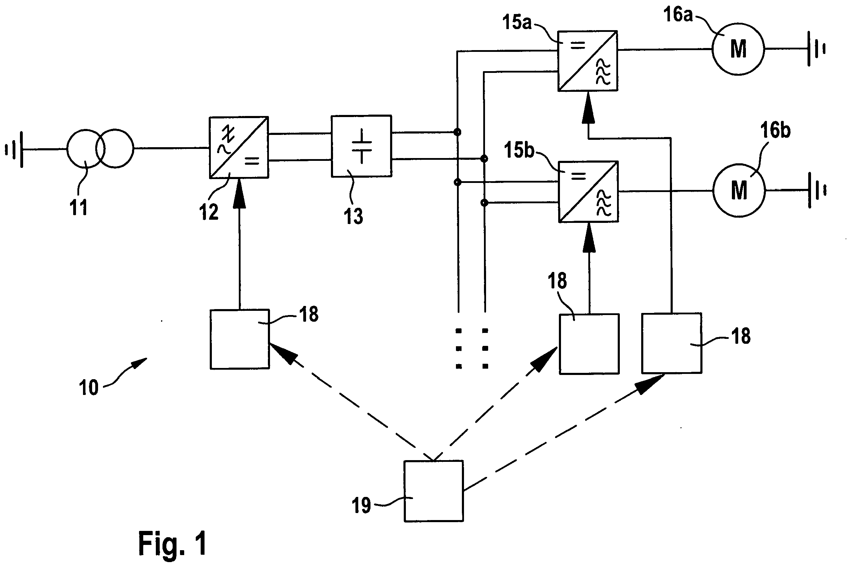

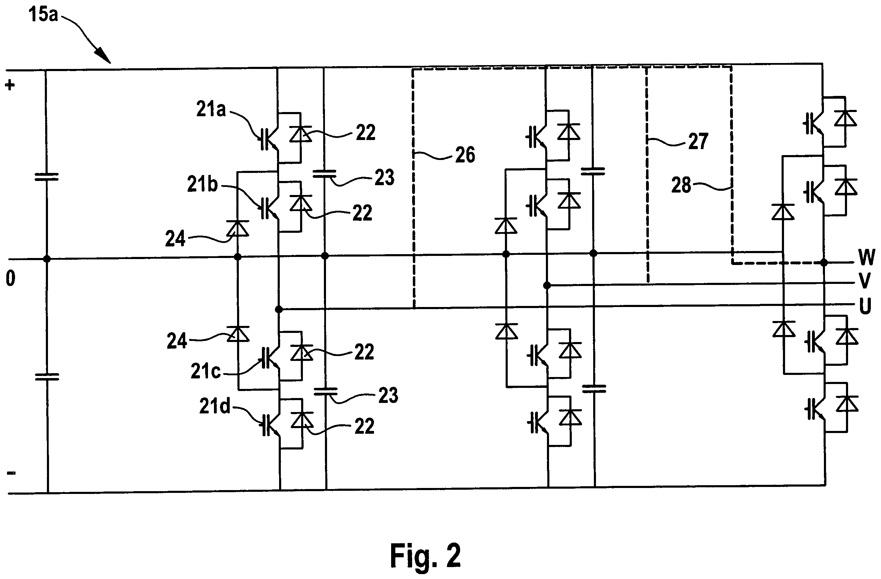

Figur 1 zeigt ein schematisches Blockschaltbild eines Ausführungsbeispiels einer erfindungsgemäßen elektrischen Schaltung mit mindestens einem Wechselrichter, und Figur 2 zeigt ein elektrisches Blockschaltbild eines Ausführungsbeispiels des Wechselrichters der Figur 1.

In der elektrischen Schaltung 10 der Figur 1 ist ein Wechselspannungsnetz 11 vorhanden, aus dem ein netzseitiger Gleichrichter 12 gespeist wird. Ausgangsseitig ist an den Gleichrichter 12 ein Zwischenkreis 13 angeschlossen, der insbesondere einen oder mehrere Kondensatoren aufweisen kann. Die von dem Gleichrichter 12 erzeugte und an dem Zwischenkreis 13 anliegende Gleichspannung wird an einen oder eine Mehrzahl von maschinenseitigen Wechselrichtern 15a, 15b weitergegeben. Jeder der Wechselrichter 15a, 15b erzeugt aus der anliegenden Gleichspannung eine bestimmte, vorgegebene Wechselspannung. Ausgangsseitig ist jeder der Wechselrichter 15a, 15b mit einer Last 16a, 16b verbunden, die in der Figur 1 beispielhaft als Motor dargestellt ist. Die von dem jeweiligen Wechselrichter 15a, 15b erzeugte Wechselspannung ist an die jeweils nachfolgende Last 16a, 16b angepasst.

Insbesondere ist die elektrische Schaltung 10 der Mittelspannungstechnik zuzuordnen, so dass es sich bei den Gleich- und Wechselrichtern 12, 15a, 15b vorzugsweise um Mittelspannungsumrichter handelt.

Bei dem Gleichrichter 12 und bei den Wechselrichtern 15a, 15b handelt es sich um geschaltete Umrichter. Zur Ansteuerung der Umrichter ist jeweils ein Pulsmustergenerator 18 vorgesehen, der die Gleich- und Wechselrichter 12, 15a, 15b ansteuert. Zu diesem Zweck können die Pulsmustergeneratoren 18 die in den Gleich- und Wechselrichtern 12, 15a, 15b enthaltenen Leistungshalbleiterbauelemente in die jeweils erwünschten Schaltzustände schalten.

Die Figur 2 zeigt beispielhaft den Wechselrichter 15a der Figur 1 im Detail. Es handelt sich dabei um einen sogenannten NPC-Wechselrichter (NPC = neutral point clamped). Es versteht sich, dass hier auch jegliche andere Ausbildungen von Wechselrichtern zum Einsatz kommen können.

Eingangsseitig weist der Wechselrichter 15a einen positiven, einen negativen und einen Null-Anschluss auf. Zwischen dem positiven und dem negativen Anschluss sind vier Halbleiterschalter 21a, 21b, 21c, 21d mit jeweils einer Freilaufdiode 22 in Serie geschaltet. Parallel dazu sind zwei Kondensatoren 23 geschaltet. Der Verbindungspunkt der beiden Kondensatoren 23 ist mit dem Null-Anschluss verbunden. Weiterhin ist der Null-Anschluss über jeweils eine Diode 24 mit dem Verbindungspunkt zwischen dem ersten und dem zweiten Halbleiterschalter 21a, 21b sowie zwischen dem dritten und dem vierten Halbleiterschalter 21c, 21d verbunden.

Der Verbindungspunkt zwischen dem zweiten und dem dritten Halbleiterschalter 21b, 21c ist zur Ausgangsseite geführt und bildet dort den Anschluss für eine Wechselspannungsphase u.

Diese Schaltungsanordnung ist dreifach vorhanden, so dass insgesamt drei ausgangsseitige Anschlüsse für die Wechselspannungsphasen u, v, w vorhanden sind.

Im Normalbetrieb der elektrischen Schaltung 10 werden die Halbleiterschalter 21a, 21b, 21c, 21d der drei Wechselspannungsphasen u, v, w des Wechselrichters 15a von dem zugehörigen Pulsmustergenerator 18 derart angesteuert, dass ausgangsseitig die erwünschte Wechselspannung vorhanden ist. Entsprechendes gilt auch für den Wechselrichter 15b.

Als Schutz gegen einen Störlichtbogen ist bei der elektrischen Schaltung 10 der Figur 1 folgendes vorgesehen:

Es sind Mittel vorhanden, mit denen ein Störlichtbogen erkannt werden kann. Dabei kann es sich um lichtempfindliche Dioden oder lichtempfindliche Fasern oder dergleichen handeln. Diese Mittel sind räumlich im Bereich der elektrischen Schaltung 10 angeordnet. Mit der Entstehung eines Störlichtbogens im Bereich der elektrischen Schaltung 10 wird ein Teil der Lichtenergie des Störlichtbogens von diesen Mitteln aufgenommen und weitergegeben.

Die vorgenannten Mittel sind mit einer Schutzschaltung 19 verbunden, von der die empfangene Lichtenergie ausgewertet wird. Die von einem Störlichtbogen stammende Lichtenergie kann von der Schutzschaltung 19 erkannt werden. Damit ist es möglich, das Entstehen eines Störlichtbogen zu erkennen.

Alternativ oder ergänzend kann es sich bei den Mitteln zur Erkennung eines Störlichtbogens um Stromsensoren, Stromwandler oder dergleichen handeln, mit denen der innerhalb der elektrischen Schaltung 10 fließende elektrische Strom erfassbar ist. Diese Mittel sind wiederum mit der Schutzschaltung 19 verbunden. Übersteigt der Strom an irgend einer Stelle innerhalb der elektrischen Schaltung 10 einen vorgegebenen Grenzwert, so kann daraus von der Schutzschaltung 19 auf einen Fehlerfall und damit auf einen möglichen Störlichtbogen geschlossen werden.

Die letztgenannten Mittel haben den Vorteil, dass in der elektrischen Schaltung 10 gegebenenfalls bereits Stromsensoren, Stromwandler oder dergleichen vorhanden sind, so dass diese vorhandenen Bauteile zur Erkennung eines Störlichtbogens verwendet werden können. Es sind also keine zusätzlichen Bauteile zur Erkennung eines Störlichtbogens erforderlich.

Ebenfalls alternativ oder ergänzend können die Mittel derart ausgebildet sein, dass sie Signale, insbesondere Ströme und Spannungen, die beispielsweise im Wechselrichter 15a bereits verfügbar sind, im Hinblick auf das Vorhandensein eines Störlichtbogens auswerten. So kann beispielsweise in Abhängigkeit von den im Wechselrichter 15a vorhandenen Energiespeichern, also den vorhandenen Kapazitäten und Induktivitäten, eine Energie- und/oder Leistungsbilanz für den Wechselrichter 15a erstellt werden. Mittels eines Vergleichs mit den zur Verfügung stehenden Signalen kann daraufhin festgestellt werden, ob Energie in Form eines Lichtbogens "verschwindet". Dies kann wiederum an die Schutzschaltung 19 weitergegeben werden.

Auch diese Mittel haben den Vorteil, dass sie auf zur Verfügung stehende Signale und Parameter zurückgreifen und somit keinen zusätzlichen Aufwand mit sich bringen.

Sobald ein Störlichtbogen erkannt ist, so steuert die Schutzschaltung 19 beispielsweise den zu dem Wechselrichter 15a zugehörigen Pulsmustergenerator 18 derart an, dass mit Hilfe der Halbleiterschalter 21a, 21b, 21c, 21d des Wechselrichter 15a ein Kurzschluss der drei Anschlüsse der Wechselspannungsphasen u, v, w erzeugt wird. Alternativ ist es möglich, dass die Schutzschaltung 19 die entsprechenden Halbleiterschalter 21a, 21b, 21c, 21d direkt ansteuert.

So ist es beispielsweise möglich, dass die jeweils ersten und zweiten Halbleiterschalter 21a, 21b in jeder der drei parallelgeschalteten Schaltungsanordnungen des Wechselrichters 15a der Figur 2 in ihren leitenden Zustand geschaltet werden. Dies hat zur Folge, dass jede der drei Wechselspannungsphasen u, v, w über diese leitenden Halbleiterschalter 21a, 21b mit dem positiven Anschluss verbunden ist. Dies ist jedoch gleichbedeutend damit, dass die drei Anschlüsse der Wechselspannungsphasen u, v, w über den positiven Anschluss miteinander kurzgeschlossen sind.

In der Figur 2 ist der vorstehend beschriebene Kurzschluss der drei Anschlüsse der Wechselspannungsphasen u, v, w über den positiven Anschluss mittels einer gestrichtelten Linie angedeutet und mit den Bezugszeichen 26, 27, 28 gekennzeichnet.

In entsprechender Weise kann ein Kurzschluss der drei Wechselspannungsphasen u, v, w dadurch erzeugt werden, dass die jeweils dritten und vierten Halbleiterschalter 21c, 21d oder dass die jeweils zweiten und dritten Halbleiterschalter 21b, 21c in ihren leitenden Zustand geschaltet werden.

Mit dem Kurzschließen der drei Wechselspannungsphasen u, v, w wird dem Störlichtbogen die Energie entzogen, so dass ein weitergehender Schaden vermieden werden kann.

Ein Vorteil der vorstehend erläuterten Vorgehensweise besteht darin, dass keine zusätzlichen Bauteile erforderlich sind, um die drei Wechselspannungsphasen u, v, w kurzzuschließen. Statt dessen werden hierfür die bereits vorhandenen Halbleiterschalter 21a, 21b, 21c, 21d des Wechselrichters 15a verwendet.

In Abhängigkeit von den Betriebsparametern der vorhandenen Halbleiterschalter 21a, 21b, 21c, 21d sowie in Abhängigkeit von dem im Fehlerfall über diese Halbleiterschalter fließenden Strom ist es möglich, dass die leitend geschalteten Halbleiterschalter aufgrund des erzeugten Kurzschlusses zerstört werden. Der insoweit entstehende Schaden ist jedoch wesentlich geringer als derjenige Schaden, der durch einen nicht-gelöschten Störlichtbogen entstehen kann.

Im übrigen ist es möglich, die Halbleiterschalter hinsichtlich ihrer Betriebsparameter derart auszuwählen, dass sie auch zum Führen des bei einem Kurzschluss auftretenden Stromes in der Lage sind. Beispielsweise sind sogenannte GTO-Halbleiterschalter (GTO = gate-turn-off) hierzu in der Lage. In diesem Fall werden die Halbleiterschalter durch das Kurzschließen bei einem Störlichtbogen nicht geschädigt.

Ein weiterer Vorteil der beschriebenen Vorgehensweise besteht darin, dass mit Hilfe der Halbleiterschalter 21a, 21b, 21c, 21d des Wechselrichters 15a ein extrem schnelles Kurzschließen der drei Wechselspannungsphasen u, v, w möglich ist. Beispielsweise bei der Verwendung der bereits erwähnten GTO-Halbleiterschalter kann eine Schaltdauer im Mikrosekundenbereich erreicht werden. Dies führt insgesamt dazu, dass die Wechselspannungsphasen u, v, w im Bereich von einer Millisekunde oder schneller nach dem Entstehen eines Störlichtbogens kurzgeschlossen werden können. Wie erläutert wurde, wird dann bereits nach dieser sehr kurzen Zeitdauer dem Störlichtbogen die Energie entzogen, so dass ein weiterer Schaden nicht mehr möglich ist.

Es versteht sich, dass die beschriebene Vorgehensweise in gleicher Weise bei dem Wechselrichter 15b sowie in entsprechend angepasster Weise auch bei dem Gleichrichter 12 zur Anwendung kommen kann.

Ebenfalls versteht es sich, dass die beschriebene Vorgehensweise nicht nur bei dreiphasigen, sondern auch bei zweiphasigen Wechselspannungen oder ganz allgemein bei n-phasigen Systemen eingesetzt werden kann.

## Patentansprüche

1. Verfahren zum Betreiben einer elektrischen Schaltung (10), wobei die Schaltung (10) einen Umrichter (12, 15a, 15b) mit einer Mehrzahl von ansteuerbaren Halbleiterschaltern (21a, 21b, 21c, 21d) sowie mindestens zwei Wechselspannungsphasen (u, v, w) aufweist, wobei ein Störlichtbogen erkannt und daraufhin einer oder mehrere der Halbleiterschalter (21a, 21b) des Umrichters (12, 15a, 15b) angesteuert werden, **dadurch gekennzeichnet, dass** einer oder mehrere der Halbleiterschalter (21a, 21b) derart angesteuert werden, dass die Wechselspannungsphasen (u, v, w) des Umrichters (12, 15a, 15b) kurzgeschlossen sind.

2. Verfahren nach Anspruch 1, wobei der Störlichtbogen dadurch erkannt wird, dass ein in der elektrischen Schaltung (10) fließender Strom einen vorgegebenen Grenzwert überschreitet.

3. Verfahren nach Anspruch 1 oder 2, wobei der Störlichtbogen dadurch erkannt wird, dass zur Verfügung stehende Signale und/oder Parameter des Umrichters (12, 15a, 15b) ausgewertet werden.

4. Elektrische Schaltung (10) mit einem Umrichter (12, 15a, 15b), der eine Mehrzahl von ansteuerbaren Halbleiterschaltern (21a, 21b, 21c, 21d) sowie mindestens zwei Wechselspannungsphasen (u, v, w) aufweist, wobei Mittel zur Erkennung eines Störlichtbogens vorgesehen sind, wobei eine Schutzschaltung (19) vorgesehen ist, die mit den Mitteln zur Erkennung eines Störlichtbogens verbunden ist, und die dazu geeignet ist, die Halbleiterschalter (21a, 21b, 21c, 21d) des Umrichters (12, 15a, 15b) zu beeinflussen, **dadurch gekennzeichnet, dass** die Schutzschaltung (19) derart ausgebildet ist, dass sie einen oder mehrere der Halbleiterschalter (21a, 21b) des Umrichters (12, 15a, 15b) nach einer Erkennung eines Störlichtbogens derart beeinflusst, dass die Wechselspannungsphasen (u, v, w) des Umrichters (12, 15a, 15b) kurzgeschlossen sind.

5. Elektrische Schaltung (10) nach Anspruch 4, wobei die Halbleiterschalter (21a, 21b, 21c, 21d) zwischen einem positiven und einem negativen Anschluss in Serie geschaltet sind, wobei drei Wechselspannungsphasen (u, v, w) vorhanden sind, wobei jede der Wechselspannungsphasen (u, v, w) mit einem Verbindungspunkt zwischen zwei der Halbleiterschalter (21a, 21b, 21c, 21d) verbunden ist, und wobei die Schutzschaltung (19) diejenigen Halbleiterschalter (21a, 21b) in einen leitenden Zustand steuert, die zwischen dem positiven Anschluss und den drei Wechselspannungsphasen (u, v, w) angeordnet sind.

6. Elektrische Schaltung (10) nach Anspruch 4 oder 5, wobei als Halbleiterschalter (21a, 21b, 21c, 21d) sogenannte GTO-Halbleiterschalter (GTO = gate-turn-off) vorgesehen sind.

7. Elektrische Schaltung (10) nach einem der Ansprüche 4 bis 6, wobei die Mittel zur Erkennung eines Störlichtbogens einen Stromsensor oder einen Stromwandler aufweisen.

8. Elektrische Schaltung (10) nach einem der Ansprüche 4 bis 7, wobei die Mittel zur Erkennung eines Störlichtbogens eine lichtempfindliche Diode oder eine lichtempfindliche Faser aufweisen.

9. Elektrische Schaltung (10) nach einem der Ansprüche 4 bis 8, wobei die Halbleiterschalter (21a, 21b, 21c, 21d) des Umrichters (12, 15a, 15b) mit einem Pulsmustergenerator (18) verbunden sind, und wobei die Schutzschaltung (19) den Pulsmustergenerator (18) beaufschlagt.

10. Elektrische Schaltung (10) nach einem der Ansprüche 4 bis 9, wobei es sich bei dem Umrichter um einen Gleichrichter (12) oder einen Wechselrichter (15a, 15b) handelt.

## Claims

1. Method for operating an electrical circuit (10), wherein the circuit (10) comprises a converter (12, 15a, 15b) with a plurality of activatable semiconductor switches (21a, 21b, 21c, 21d) and at least two alternating current (AC) voltage phases (u, v, w), wherein an internal arc fault is detected and thereupon one or more of the semiconductor switches (21a, 21b) of the converter (12, 15a, 15b) are activated, **characterised in that** one or more of the semiconductor switches (21a, 21b) are activated such that the AC voltage phases (u, v, w) of the converter (12, 15a, 15b) are short-circuited.

2. Method according to claim 1, wherein the internal arc fault is detected in that a current flowing in the electrical circuit (10) exceeds a predefined limit value.

3. Method according to claim 1 or 2, wherein the internal arc fault is detected in that signals available and/or parameters of the converter (12, 15a, 15b) are evaluated.

4. Electrical circuit (10) with a converter (12, 15a, 15b) which comprises a plurality of activatable semiconductor switches (21a, 21b, 21c, 21d) and at least two alternating current (AC) voltage phases (u, v, w), wherein means for detecting an internal arc fault are provided, wherein a protective circuit (19) is provided which is connected to the means for detecting an internal arc fault and which is adapted to influence the semiconductor switches (21a, 21b, 21c, 21d) of the converter (12, 15a, 15b), **characterised in that** the protective circuit (19) is configured to influence one or more of the semiconductor switches (21a, 21b) of the converter (12, 15a, 15b) after detection of an internal arc fault such that the AC voltage phases (u, v, w) of the converter (12, 15a, 15b) are short-circuited.

5. Electrical circuit (10) according to claim 4, wherein the semiconductor switches (21a, 21b, 21c, 21d) are connected in series between a positive and a negative connection, wherein three AC voltage phases (u, v, w) are present, wherein each of the AC voltage phases (u, v, w) is connected to a connection point between two of the semiconductor switches (21a, 21b, 21c, 21d), and wherein the protective circuit (19) controls to a conductive state those semiconductor switches (21a, 21b) which are arranged between the positive connection and the three AC voltage phases (u, v, w).

6. Electrical circuit (10) according to claim 4 or 5, wherein so-called GTO (gate turn-off) semiconductor switches are provided as semiconductor switches (21a, 21b, 21c, 21d).

7. Electrical circuit (10) according to any of claims 4 to 6, wherein the means for detecting an internal arc fault comprise a current sensor or a transformer.

8. Electrical circuit (10) according to any of claims 4 to 7, wherein the means for detecting an internal arc fault comprise a light-sensitive diode or a light-sensitive fibre.

9. Electrical circuit (10) according to any of claims 4 to 8, wherein the semiconductor switches (21a, 21b, 21c, 21d) of the converter (12, 15a, 15b) are connected to a pulse pattern generator (18), and wherein the protective circuit (19) acts on the pulse pattern generator (18).

10. Electrical circuit (10) according to any of claims 4 to 9, wherein the converter is a rectifier (12) or an inverter (15a, 15b).

## Revendications

1. Procédé pour faire fonctionner un circuit électrique (10), le circuit (10) présentant un convertisseur (12, 15a, 15b), comportant une pluralité de commutateurs à semi-conducteur (21a, 21b, 21c, 21d) pouvant être activés, ainsi qu'au moins deux phases de tension alternative (u, v, w), où un arc de lumière parasite est détecté et, à la suite de cela, un ou plusieurs des commutateurs à semi-conducteur (21a, 21b) du convertisseur (12, 15a, 15b) sont activés, **caractérisé en ce qu'**un ou plusieurs des commutateurs à semi-conducteur (21a, 21b) sont activés de manière telle que les phases de tension alternative (u, v, w) du convertisseur (12, 15a, 15b) soient mises en court-circuit.

2. Procédé selon la revendication 1, selon lequel l'arc de lumière parasite est détecté par le fait qu'un courant circulant dans le circuit électrique (10) dépasse une valeur limite prédéterminée.

3. Procédé selon la revendication 1 ou 2, selon lequel l'arc de lumière parasite est détecté par le fait que l'on évalue des signaux et/ou des paramètres du convertisseur (12, 15a, 15b) qui sont disponibles.

4. Circuit électrique (10) comprenant un convertisseur (12, 15a, 15b) qui présente une pluralité de commutateurs à semi-conducteur (21a, 21b, 21c, 21d) pouvant être activés, ainsi qu'au moins deux phases de tension alternative (u, v, w), sachant qu'il est prévu des moyens de détection d'un arc de lumière parasite, sachant qu'il est prévu un circuit de protection (19) qui est relié aux moyens de détection d'un arc de lumière parasite et qui est adapté pour influencer les commutateurs à semi-conducteur (21a, 21b, 21c, 21d) du convertisseur (12, 15a, 15b), **caractérisé en ce que** le circuit de protection (19) est réalisé de manière à influencer un ou plusieurs des commutateurs à semi-conducteur (21a, 21b) du convertisseur (12, 15a, 15b), après une détection d'un arc de lumière parasite, de manière à ce que les phases de tension alternative (u, v, w) du convertisseur (12, 15a, 15b) soient mises en court-circuit.

5. Circuit électrique (10) selon la revendication 4, dans lequel les commutateurs à semi-conducteur (21a, 21b, 21c, 21d) sont montés en série entre une borne positive et une borne négative, sachant qu'il est prévu trois phases de tension alternative (u, v, w), chacune des phases de tension alternative (u, v, w) étant reliée à un point de connexion entre deux des commutateurs à semi-conducteur (21a, 21b, 21c, 21d), et sachant que le circuit de protection (19) commande, pour les commuter à l'état passant, ceux des commutateurs à semi-conducteur (21a, 21b) qui sont disposés entre la borne positive et les trois phases de tension alternative (u, v, w).

6. Circuit électrique (10) selon la revendication 4 ou 5, dans lequel il est prévu en tant que commutateurs à semi-conducteur (21a, 21b, 21c, 21d), des commutateurs à semi-conducteur dits « GTO » (GTO = gate-turn-off : à extinction par la gâchette).

7. Circuit électrique (10) selon une des revendications 4 à 6, dans lequel les moyens de détection d'un arc de lumière parasite présentent un capteur de courant ou un transformateur de courant.

8. Circuit électrique (10) selon une des revendications 4 à 7, dans lequel les moyens de détection d'un arc de lumière parasite présentent une diode sensible à la lumière ou une fibre sensible à la lumière.

9. Circuit électrique (10) selon une des revendications 4 à 8, dans lequel les commutateurs à semi-conducteur (21a, 21b, 21c, 21d) du convertisseur (12, 15a, 15b) sont reliés à un générateur de motifs d'impulsions (18), et dans lequel le circuit de protection (19) active le générateur de motifs d'impulsions (18).

10. Circuit électrique (10) selon une des revendications 4 à 9, sachant que le convertisseur est un redresseur (12) ou un onduleur (15a, 15b).
